# EUROPEAN PATENT APPLICATION

(11) **EP 4 310 215 A1**
(43) Date of publication of application: **24.01.2024**
(21) Application number: 22771523.2
(22) Date of filing: 17.03.2022
(51) Int. Cl.: C22C 38/00, C22C 38/14, B33Y 80/00, B33Y 70/00, B22F 1/00, B22F 10/28, B22F 10/34, C22C 33/02, C22C 38/06, C22C 38/08, C22C 38/10

(54) **METAL POWDER FOR ADDITIVE MANUFACTURING AND ADDITIVELY MANUFACTURED PRODUCT USING SAME**

(30) Priority: 18.03.2021 JP 2021044355
(71) Applicant: Proterial, Ltd., Tokyo 135-0061 (JP)
(72) Inventor: FUKUZAWA, Norihide, Tokyo 108-8224 (JP); SAITO, Kazuya, Tokyo 108-8224 (JP); WANG, Jue, Tokyo 108-8224 (JP)
(74) Representative: Becker, Eberhard
(86) International application number: PCT/JP2022/012428
(87) International publication number: WO 2022/196778

(57) **Abstract**

Provided are: a metal powder for additive manufacturing that makes it possible to produce an additively manufactured product that has excellent mechanical properties and few internal flaws and undergoes little deformation due to strain; and an additively manufactured product using the metal powder for additive manufacturing. A metal powder for additive manufacturing that comprises, by mass%, 14.0%-24.0% of Ni, 2.0%-8.0% of Mo, 10.5%-20.0% of Co, 0.01%-2.00% of Al, and 0.10%-3.00% of Ti, the remainder being Fe and unavoidable impurities. An additively manufactured product that comprises, by mass%, 14.0%-24.0% of Ni, 2.0%-8.0% of Mo, 10.5%-20.0% of Co, 0.01%-2.00% of Al, and 0.10%-3.00% of Ti, the remainder being Fe and unavoidable impurities. In a cross-section of the additively manufactured product taken parallel to the build direction, there are fewer than 0.1 flaws that have an equivalent circle diameter of more than 20 µm per 1 mm².

## Description

### Technical Field

This invention relates to a metal powder for additive manufacturing, and an additively manufactured product using the same.

### Description of Related Art

The additive manufacturing method is attracting attention as a means for easily forming metal products (parts) having a complicated shape in a near-net shape. Additive manufacturing is also referred to as 3D printing in general. Then, as types of additive manufacturing method, for example, a powder spray method in which metal powder is melted by laser irradiation to build layers, and a powder bed method in which an operation of irradiating metal powder spread on a stage with a laser to melt it and solidifying it is repeated to build layers.

With the additive manufacturing method, a metal product having a complicated shape can be manufactured while conventional machining steps are largely omitted, so a metal material difficult to process can be used. In addition, because the metal material difficult to process is exclusively a high-strength metal material, it is possible to manufacture a metal product having a complicated shape and a long durable life.

A high-strength metal material is maraging steel, which is, for example, precipitation hardened ultra-high strength steel in which aging hardening elements such as Co, Mo, Ti and Al are added to steel containing about 18% by mass of Ni. Since maraging steel is also excellent in toughness, using maraging steel as a material for various tools and structural parts is effective in extending the life of these metal products. Also, additively manufactured products produced by additive manufacturing methods using maraging steel as a metal material have been proposed (Patent Literature 1).

### Prior-Art Literatures

### Patent Literatures

Patent Literature 1: WO 2019/082638
Patent Literature 2: Japanese Patent No. 6295001

### SUMMARY OF INVENTION

### Problems to be Solved by Invention

Additively manufactured products made from maraging steel can be expected to maintain mechanical properties such as excellent strength and toughness, in addition to being capable of handling complex product shapes. However, depending on the manufacturing conditions of the additive manufacturing, such as that the productivity is prioritized, that the scanning speed or movement speed of the heat source is increased, or the stacking thickness is increased, defects such as voids are formed inside the additively manufactured product during the manufacturing. Thus, there is a problem that sufficient mechanical properties corresponding to the component composition of maraging steel may not be obtained.

Moreover, in the production of additively manufactured products, there is concern about the occurrence of strain due to residual stress. Particularly, for carbon steel or martensitic stainless steel with martensite transformation, a technique has been proposed for alleviating strain in an additively manufactured product by adjusting the temperatures between multiple layers of the additively manufactured product with a temperature regulating mechanism of the additive manufacturing apparatus, considering the martensitic transformation start temperature (Ms point) of the raw material powder (Patent Literature 2).

Even if the heat input conditions are optimized to reduce internal defects such as voids, there is still a problem that the strain caused by the thermal contraction of the material during the manufacturing may cause deformation or cracking in the additively manufactured product.

An object of this invention is to provide a metal powder for additive manufacturing that allows producing an additively manufactured product having few internal defects, little deformation caused by strain and excellent mechanical properties, and an additively manufactured product using the metal powder for additive manufacturing.

### Solution to the Problems

This invention includes a metal powder for additive manufacturing that comprises, by mass%, 14.0% to 24.0% of Ni, 2.0% to 8.0% of Mo, 10.5% to 20.0% of Co, 0.01% to 2.00% of Al, and 0.10% to 3.00% of Ti, the balance being Fe and unavoidable impurities.

The metal powder for additive manufacturing of this invention preferably includes 0.030% by mass or less of nitrogen.

In addition, the metal powder for additive manufacturing of this invention preferably includes 0.040% by mass or less of oxygen.

This invention also includes an additively manufactured product that comprises, by mass%, 14.0% to 24.0% of Ni, 2.0% to 8.0% of Mo, 10.5% to 20.0% of Co, 0.01% to 2.00% of Al, and 0.10% to 3.00% of Ti, the balance being Fe and unavoidable impurities, wherein in a cross section thereof parallel to the build direction thereof, there is fewer than 0.1 defect having an equivalent circle diameter exceeding 20 µm per 1 mm².

The additively manufactured product of this invention preferably has, in a cross section thereof parallel to the build direction thereof, 0.1 or more and less than 10 defects having an equivalent circle diameter of 5 µm or more and 20 µm or less per 1 mm².

### Effect of Invention

With this invention, a metal powder for additive manufacturing that allows producing an additively manufactured product having few internal defects, little deformation caused by strain and excellent mechanical properties, and an additively manufactured product using the metal powder for additive manufacturing can be provided.

### BRIEF DESCRIPTION OF DRAWINGS

FIG. 1 shows an optical microscope photograph of an exemplary cross section parallel to the build direction of the additively manufactured product of an example of this invention.
FIG. 2 shows the metallographic structure of the additively manufactured product of the example of this invention after the additive manufacturing step and before a solution treatment.
FIG. 3 shows the metallographic structure of the additively manufactured product of the example of this invention after the solution treatment.
FIG. 4 is an optical microscope photograph showing an exemplary cross section parallel to the build direction of the additively manufactured product of a comparative example.
FIG. 5 is a schematic diagram of a test piece for warpage magnitude measurement used in the evaluation of strain.
FIG. 6 shows a SEM photograph and an EDX analysis result of the inclusions identified in the manufactured product.

### DESCRIPTION OF THE EMBODIMENTS

The metal powder for additive manufacturing of this invention has a component composition comprising, by mass%, 14.0% to 24.0% of Ni, 2.0% to 8.0% of Mo, 10.5% to 20.0% of Co, 0.01% to 2.00% of Al, and 0.10% to 3.00% of Ti, the balance being Fe and unavoidable impurities. The reasons for such defining each element are described below.

### Ni= 14.0-24.0 mass%

Ni forms an intermetallic compound with Ti, Al and Mo, etc. and contributes to strength improvement, and is a fundamental element necessary for making a maraging steel. Therefore, in this invention, the Ni content is set to 14.0 mass% or more. For the same reason as above, the Ni content is preferably 15.0 mass% or more, more preferably 17.0 mass% or more.

On the other hand, when the Ni content is too high, the austenitic structure is stabilized, making it difficult to form the martensitic structure. Therefore, in this invention, the Ni content is set to 24.0 mass% or less. For the same reason as above, the Ni content is preferably 22.0 mass% or less, more preferably 20.0 mass% or less.

### Mo: 2.0-8.0 mass%

Mo is an element that has an effect of improving the strength by forming the intermetallic compound Ni₃Mo in the aging treatment to precipitate-strengthen or solid-solution-strengthen the metallographic structure. Therefore, in this invention, the Mo content is set to 2.0 mass% or more. For the same reason as above, the Mo content is preferably 3.0 mass% or more, more preferably 4.0 mass% or more.

On the other hand, if the Mo content is too high, coarse intermetallic compounds with Fe are excessively formed, resulting in decrease in toughness. Therefore, in this invention, the Mo content is set to 8.0 mass% or less. For the same reason as above, the Mo content is preferably 7.0 mass% or less, more preferably 6.0 mass% or less.

### Co: 10.5-20.0 mass%

Co is an element having an effect of improving strength and toughness. Co is also an element useful in lowering the solidus temperature. By containing Co within a predetermined range, it is possible to facilitate melting of the metal powder, thereby obtaining an effect of reducing internal defects in the additively manufactured product while contributing to a reduction in the output power of laser.

In addition, since Co is an austenite-forming element, adding a large amount of Co has the effect of suppressing martensite transformation, so that Co is considered to be an element that contributes to lowering the Ms point. By containing Co, the Ms point of the metal powder can be lowered, and the strain generated in the additively manufactured product can be reduced even if there is no strict temperature adjustment by the temperature regulating mechanism of the additive manufacturing apparatus between multiple layers of the additively manufactured product.

Therefore, in this invention, the Co content is set to 10.5 mass% or more. For the same reason as above, the Co content is preferably 11.0 mass% or more, more preferably 11.5 mass% or more.

On the other hand, Co is an expensive element. If the Co content is too high, the hardness of the additively manufactured product increases, and the toughness may deteriorate. Therefore, in this invention, the Co content is set to 20.0 mass%. For the same reason as above, the Co content is preferably 15.0 mass% or less, more preferably 13.0 mass% or less, and even more preferably 12.5 mass% or less.

### Al: 0.01-2.00 mass%

Al is an element that can be used as a deoxidizing agent in the smelting process, and when Al is contained, Al forms an intermetallic compound with Ni and has the effect of precipitation strengthening the metallographic structure. Therefore, in this invention, the Al content is set to 0.01 mass% or more. For the same reason as above, the Al content is preferably 0.03 mass% or more, more preferably 0.07 mass% or more.

On the other hand, if there is too much Al after smelting, non-metallic inclusions increase in the metallographic structure, and the toughness may decrease. Therefore, in this invention, the Al content is set to 2.00 mass% or less. For the same reason as above, the Al content is preferably 1.00 mass% or less, more preferably 0.50 mass% or less, even more preferably 0.25 mass% or less, and still more preferably 0.20 mass% or less.

### Ti: 0.10-3.00 mass%

Ti is an element that forms Ni3Ti as a strengthening phase in the structure after the aging treatment and imparts strength. Also, Ti is an element useful in lowering the solidus temperature. By containing Ti within a predetermined range, melting of the metal powder can be facilitated, and an effect of reducing the internal defects of the additively manufactured product while contributing to reduction of the laser output can be obtained. Therefore, in this invention, the Ti content is set to 0.10 mass% or more. For the same reason as above, the Ti content is preferably 0.50 mass% or more, more preferably 1.00 mass% or more.

On the other hand, if the Ti content is too high, significant Ti segregation occurs in the structure during solidification, and this significant Ti segregation remains in the structure after the aging treatment, so that the toughness may deteriorate. Therefore, in this invention, the Ti content is set to 3.00 mass% or less. For the same reason as above, the Ti content is preferably 2.50 mass% or less, more preferably 2.00 mass% or less, even more preferably 1.80 mass% or less, and still more preferably 1.60 mass% or less.

The metal powder for additive manufacturing of this invention preferably contains 0.030% by mass or less of nitrogen. Nitrogen is an element that is inevitably incorporated into the metal powder from the raw material and the atmosphere during the melting and pulverization processes in the metal powder manufacturing process. If the content of nitrogen is too high, it combines with Ti, Al and Mo, etc. in the additively manufactured product to form a large amount of nitride. This nitride acts as a starting point of fracture and may reduce the toughness. Thus, in this invention, the content of nitrogen is preferably 0.030 mass% or less, more preferably 0.020 mass% or less, and even more preferably 0.005 mass% or less.

However, N is an element that is unavoidably mixed in a general manufacturing process of powder for additive manufacturing such as gas atomization. The metal powder for additive manufacturing of this invention is allowed to contain 0.001 mass% or more of nitrogen from the viewpoint of suppressing internal defects in the additive manufactured product and ensuring sufficient toughness.

The metal powder for additive manufacturing of this invention preferably contains 0.040% by mass or less of oxygen. Oxygen is an element that is inevitably incorporated into the metal powder from raw materials and the atmosphere during the melting and pulverization processes in the metal powder manufacturing process. Oxygen combines with Ti and Al, etc. to form an oxide inside or on the surface of the metal powder. This oxide may act as a starting point of fracture and reduce the toughness. Therefore, in this invention, the content of oxygen is preferably 0.040 mass% or less, more preferably 0.030 mass% or less, and even more preferably 0.020 mass% or less.

The metal powder for additive manufacturing of this invention is allowed to contain 0.005 mass% or more or 0.010 mass% or more of oxygen from the viewpoint of suppressing internal defects in the additively manufactured product and ensuring sufficient toughness.

The metal powder for additive manufacturing of this invention has a basic component composition that selectively contains the aforementioned element species, with the balance being Fe and unavoidable impurities. In addition, in the metal powder for additive manufacturing of this invention, carbon is preferably limited to 0.1 mass% or less in order to obtain a high-toughness, low-carbon martensitic structure that is characteristic of maraging steel.

The metal powder for additive manufacturing of this invention can be produced by, for example, a gas atomization method, a water atomization method, a disc atomization method, a plasma atomization method, or a rotating electrode method, etc. Among them, in the gas atomization method, a molten raw material prepared to have a desired composition is heated to a temperature higher than its melting point and melted by high-frequency induction heating, and then the molten metal flowing out through an orifice is finely pulverized by injecting an inert gas such as argon gas and nitrogen gas and then rapidly cooled and solidified to obtain a powder. This gas atomization method allows use of scrap metals and metal coarse raw materials, etc. as melting raw materials, and thus allows manufacturing at a low cost as compared to the plasma atomization method or rotating electrode method, etc. that requires preparation of a raw material with desired composition and shape in advance, and is therefore suitable as a method for obtaining the metal powder for additive manufacturing of this invention.

The metal powder for additive manufacturing of the present invention preferably has, in a volume-based cumulative particle size distribution, a 50% particle size (hereinafter referred to as "D50") of 10 to 250 µm. By setting the D50 of the metal powder for additive manufacturing of this invention to 250 µm or less, the powder can be easily melted, and formation of internal defects in the additively manufactured product can be suppressed.

In addition, by setting the D50 of the metal powder for additive manufacturing of this invention to 10 µm or more, the atmosphere in the handling or the additive manufacturing of the metal powder are less likely to be affected by humidity, etc., and good fluidity can be ensured.

The cumulative particle size distribution of the manufacturing powder of this invention is represented by the cumulative volume-based particle size distribution, and the D50 of the same can be expressed as a value measured by the laser diffraction scattering method specified in JIS Z 8825.

For the metal powder for additive manufacturing of this invention, the D50 of the metal powder may be adjusted by sieving classification using a mesh, or airflow classification, etc. in accordance with the aforementioned method. For example, a metal powder for additive manufacturing used in the powder bed method needs to be melted by a laser beam as a heat source, while removing coarse metal powder difficult to melt in order to minimize the range of thermal influence. In addition, in order to obtain the optimum fluidity to ensure spreadability of the metal powder, it is necessary to remove highly adhesive fine metal powder. Therefore, in a case where the metal powder for additive manufacturing of this invention is applied to the powder bed method, it is preferred to adjust the D50 within the range of 10-53 µm.

Next, the additively manufactured product of this invention is described. The product includes, by mass, 14.0% to 24.0% of Ni, 2.0% to 8.0% of Mo, 10.5% to 20.0% of Co, 0.01% to 2.00% of Al, and 0.10% to 3.00% of Ti, the balance being Fe and unavoidable impurities, and is characterized in that the number of defects having an equivalent circle diameter exceeding 20 µm in a cross section parallel to the build direction is less than 0.1 per 1 mm². The component composition of the additively manufactured product is as described above.

In the additively manufactured product, if there is a defect with an equivalent circle diameter exceeding 20 µm, stress concentration is likely to occur when stress is applied, and the defect acts as a starting point of fracture, possibly reducing the ductility and the toughness or degrading the fatigue properties significantly. In such mode, because defects in an additively manufactured product occur in each layer during the manufacturing process, to evaluate defects occurring in the additively manufactured product, it is appropriate to observe a "cross section parallel to the build direction", which is a cross section including each layer.

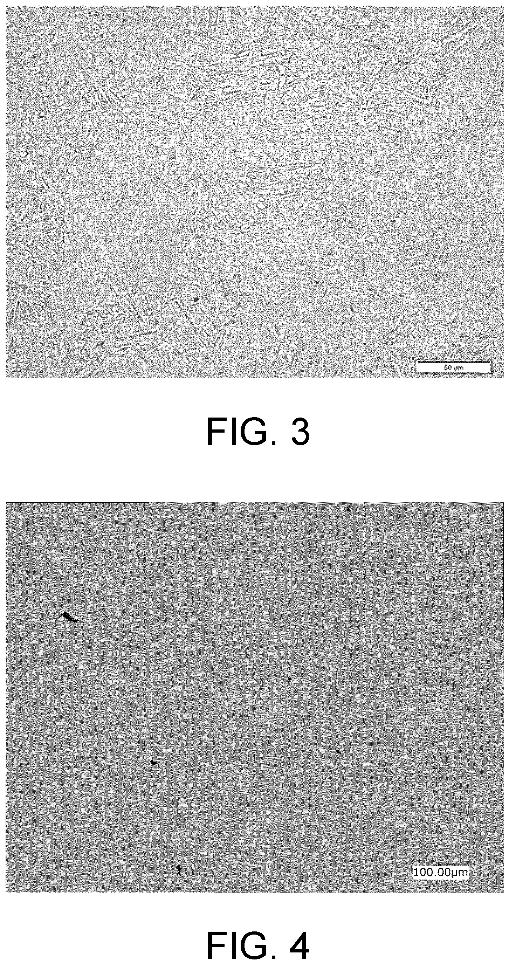

Here, FIG. 4 shows an example of an optical microscope photograph of a defective portion identified in a cross section parallel to the build direction of the additively manufactured product. In FIG. 4, the portion indicated by the black portion in the base material indicated by the gray portion is the defective portion. In the additively manufactured product of this invention, in FIG. 4 showing an exemplary cross section parallel to the build direction, less than 0.1 defect having an equivalent circle diameter exceeding 20 µm indicated by black portion is present per 1 mm². Thereby, when the aforementioned stress is applied to the additively manufactured product of this invention, cracks are less likely to occur due to absence of fracture starting point, and a decrease in ductility and toughness can be suppressed. In addition, fatigue characteristics are improved.

In addition, in an additively manufactured product, "small units" of metal powder are partially melted and solidified. Hence, casting defects such as voids, gaps, porosity, blowholes, and pinholes are likely to occur in the formed additively manufactured product. These defects do not disappear even after a heat treatment such as solution treatment and aging treatment, which are performed to impart the mechanical properties necessary for using the additively manufactured product as a metal product (part), and remain in the additively manufactured product.

In FIG. 4 showing an example of a cross section parallel to the build direction, the additively manufactured product of this invention has, per 1 mm², 0.1 or more and less than 10 defects having an equivalent circle diameter of 5 µm or more and 20 µm or less indicated by the black portions. Thereby, as the aforementioned stress is applied to the additively manufactured product of this invention, crack propagation is less likely to occur, and deterioration in ductility and toughness can be suppressed and fatigue characteristics can be improved. For the same reason as above, the number of defects having an equivalent circle diameter of 5 µm or more and 20 µm or less is more preferably 6.0 or less per 1 mm².

The analyses of the above "defects having an equivalent circle diameter exceeding 20 µm" and "defects having an equivalent circle diameter of 5 µm or more and 20 µm or less" can utilize, for example, an optical microscope. First, a cross section parallel to the build direction of the additively manufactured product is taken from the central position of the same. At this time, whether or not this cross section is "parallel to the build direction" can be confirmed from the traces of stacking in the additively manufactured product and the form of the product.

Next, images of this cross section photographed with an optical microscope (magnification of 500) are connected to create a cross-sectional image of 1.25 mm or more in length×1.6 mm or more in width. An area of 1.25 mm or more in length and 1.6 mm or more in width is defined as one field of view, and 5 fields of view are photographed to obtain a measurement field of 10 mm². Then, each imaged field of view is binarized so that the boundary between the defect and the base material becomes clear, and the number of all defects with an equivalent circle diameter of 5 µm or more in the field of view is measured. Here, the imaging of cross-sectional images, connection, binarization processing, and measurement of equivalent circle diameters and number of defects can be performed with, for example, Microscope VHX-6000 of Keyence Corporation.

The additively manufactured product of this invention can be made by including a step of blanket-spreading the metal powder in layers, and a step of sequentially melting and solidifying the spread metal powder with a scanning heat source having a diameter larger than the D50 of the metal powder, and repeating the step of blanket-spreading the metal powder in layers and the step of forming the solidified layers to form plural layered solidified layers. The scanning heat source can utilize, for example, a laser or an electron beam. And, it is preferred to make the diameter of the scanning heat source larger than the D50 of the metal powder so that the aggregate of the metal powder can be uniformly melted.

And, the additively manufactured product of this invention may be produced by scanning and irradiating the metal powder for additive manufacturing with a laser in a laser output of 50 to 350 W, a scanning speed of 200 to 2000 mm/sec, and a scanning pitch of 0.02 to 0.20 mm.

Here, if the stacking thickness per laser scan is too large, it becomes difficult for heat to be conducted to the entire spread metal powder during laser irradiation, and the metal powder is not sufficiently melted, thus promoting the generation of internal defects. On the other hand, if the stacking thickness per scan is too small, the number of stacking steps to obtain a predetermined size of the additively manufactured product increases, and the time required for the additive manufacturing process increases. Therefore, the stacking thickness per scan is preferably 10 to 200 µm, more preferably 20 µm or more and 100 µm or less.

In order to give the additively manufactured product of this invention the mechanical properties necessary for use as a metal product (part), the as-additively-manufactured member is further subjected to solution treatment and aging treatment. is preferred.

Maraging steel is usually solution-treated and aged before use as a metal product (part). In the solution treatment, the intermetallic compound precipitated due to the heat during the manufacturing is dissolved, and the anisotropic structure formed by the molten pool and the solidified structure formed in the additive manufacturing process is recrystallized. This is useful in that a structure having equiaxed crystal grains can be obtained and the anisotropy in mechanical properties can be eliminated. This solution treatment is also a useful heat treatment as being able to eliminate the segregation formed in the structure during the additive manufacturing process.

The temperature of the solution treatment is preferably 800°C or higher, more preferably 850°C or higher, even more preferably 900°C or higher, and still more preferably 950°C or higher. By increasing the temperature of the solution treatment, the effect of eliminating the segregation formed during the additive manufacturing is improved. However, if the temperature of the solution treatment is too high, the prior austenite grains are coarsened, and the strength and the toughness of the additively manufactured product are lowered. Hence, the temperature of the solution treatment is preferably 1200°C or lower, more preferably 1100°C or lower, and still more preferably 1050° C or lower.

The time of the solution treatment (the maintenance time at the temperature of the solution treatment) is preferably 10 minutes or longer, more preferably 30 minutes or longer, and even more preferably 45 minutes or longer. By lengthening the time of the solution treatment, the effect of eliminating the segregation formed during the additive manufacturing is improved. However, if the time of the solution treatment is too long, the grain size of the prior austenite is coarsened. Therefore, the time of the solution treatment is preferably 120 minutes or less, more preferably 100 minutes or less, and even more preferably 80 minutes or less.

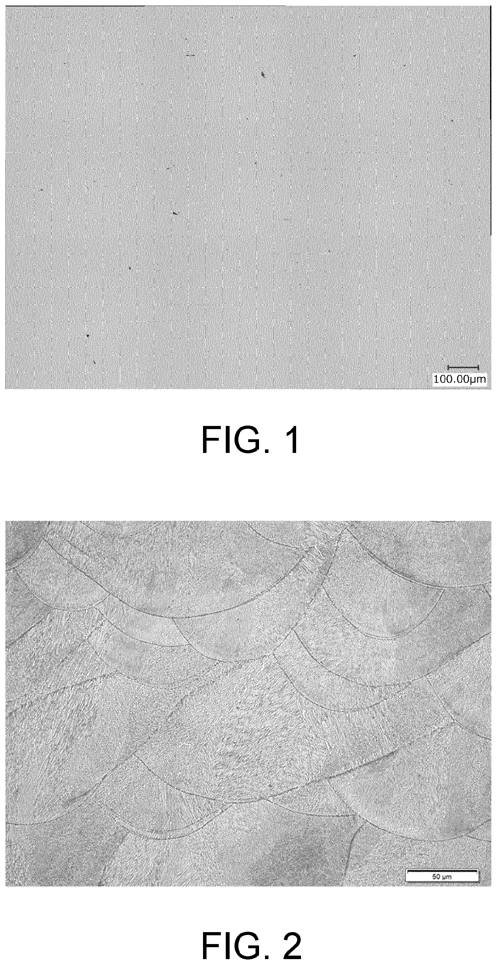

FIG. 2 shows the metallographic structure after additive manufacturing and before solution treatment. The metallographic structure before the solution treatment is found to have traces of molten pools as traces of stacking, and is in a form of an anisotropic structure. FIG. 3 shows the metal structure after a solution treatment at 950°C for 60 minutes. The metallographic structure after the solution treatment does not show traces of molten pools or cell-like structures, and is in the form of a structure having equiaxed prior austenite grain boundaries.

The aging treatment performed after the solution treatment make various intermetallic compounds precipitate in the structure, and is useful in, for example, adjusting the hardness to 40 to 65 HRC to obtains superior high strength and high toughness.

The temperature of the aging treatment is preferably 400°C or higher, more preferably 450°C or higher, even more preferably 500°C or higher, and still more preferably 550°C or higher. By increasing the aging treatment temperature, an effect of improving the strength can be obtained due to precipitation of Ni₃Ti. However, if the temperature of the aging treatment is too high, the intermetallic compounds coarsen, and the strength corresponding to the amount of precipitated intermetallic compounds cannot be obtained sufficiently. Hence, the temperature of the aging treatment is preferably 700°C or lower, more preferably 650°C or lower, even more preferably 640°C or lower, and still more preferably 630°C or lower. The temperature also can be set to 600°C or lower.

The time of the aging treatment (maintenance time at the temperature of the aging treatment) is preferably 60 minutes or longer, more preferably 100 minutes or longer, and even more preferably 150 minutes or longer. By lengthening the time of the aging treatment, the amount of various intermetallic compounds increases. However, if the time of the aging treatment is too long, the intermetallic compound coarsens and the strength decreases. Therefore, the time of the aging treatment is preferably 600 minutes or less, more preferably 400 minutes or less, and even more preferably 200 minutes or less.

### Examples

After each metal raw material was prepared so as to have the composition shown in Table 1, it was charged into a high-frequency induction melting furnace and melted, and the molten metal was pulverized with argon gas to obtain a gas-atomized powder. The obtained atomized powder was subjected to sieving classification using a mesh and airflow classification to adjust the particle size, thereby obtaining powders for additive manufacturing having a D50 of 35 µm as examples of this invention and comparative examples.

Then, using EOS-M290 manufactured by EOS Co., Ltd., an additively manufactured product was manufactured under the manufacturing condition 2 shown in Table 2 for each of the metal powders for additive manufacturing obtained as above.

**Table 1**

| Mass% | | | | | | | | |
|---|---|---|---|---|---|---|---|---|
| *Including unavoidable impurities | | | | | | | | |
| | Ni | Mo | Co | Al | Ti | N | O | Fe* |
| Example of this invention | 18.7 | 4.9 | 12.0 | 0.13 | 1.48 | <0.001 | 0.015 | Balance |
| Comparative Example | 18.0 | 4.9 | 8.9 | 0.06 | 0.75 | 0.020 | 0.047 | Balance |

**Table 2**

| | Laser output [W] | Laser focus width [µm] | Scanning speed [mm/sec] | Stacking thickness [µm] | Scanning pitch [mm] |
|---|---|---|---|---|---|
| Manufacturing condition 1 | 300 | 100 | 900 | 40 | 0.09 |
| Manufacturing condition 2 | 200 | 100 | 1000 | 40 | 0.09 |

Regarding the additively manufactured products of the example of this invention and the comparative examples obtained as above, a cross section parallel to the build direction thereof was analyzed in the manner described above, and the number of defects having an equivalent circle diameter of 5 µm or more in the cross section was investigated. The five fields of view used for the defect investigation were taken at different positions within the "same (single) cross section". The results are shown in Table 3.

Also, FIG. 1 shows an optical microscope photograph of a cross section parallel to the build direction of the additively manufactured product of the example of this invention, and FIG. 4 shows that of the additively manufactured product of the comparative example.

**Table 3**

| | Number density of defects having an equivalent circle diameter exceeding 20 µm [counts/mm²] | Number density of defects having an equivalent circle diameter of 5 µm or more and less than 20 µm [counts/mm²] |
|---|---|---|
| Example of this invention | 0 | 5.8 |
| Comparative example | 0.2 | 11.8 |

In the additively manufactured product of the comparative example, 0.2 defect having an equivalent circle diameter exceeding 20 µm was identified per 1 mm², whereas in the additively manufactured product of the example of this invention, there was no defect identified.

In addition, per 1 mm², the additively manufactured product of the comparative example had 11.8 defects having an equivalent circle diameter of 5 µm or more and less than 20 µm, whereas the additively manufactured product of the example of this invention had 5.8 such defects.

From this result, because the additively manufactured product made by the metal powder for additive manufacturing of this invention had few defects, even under a manufacturing condition in which the heat input is reduced in consideration of productivity, it can still be expected that sufficient mechanical properties corresponding to the component composition of maraging steel such as high toughness and high ductility can be obtained.

In order to confirm the magnitude of the strain generated in the additively manufactured product, the Ms points of the examples of this invention and the comparative example were measured. A test piece of *φ*2×10 mm was taken from the manufactured product before the heat treatment. Using this test piece, the Ms point was measured with a transformation point measurement (Formaster test) apparatus. The temperature was raised at 10°C/min, held at the maximum temperature of 1000°C for 5 minutes, and then cooled at 20°C/sec. The temperature at which the test piece started to expand during cooling was defined as the Ms point. The results are shown in Table 4. While the Ms point of the comparative example was 160°C, the Ms point of the example of this invention was 118°C.

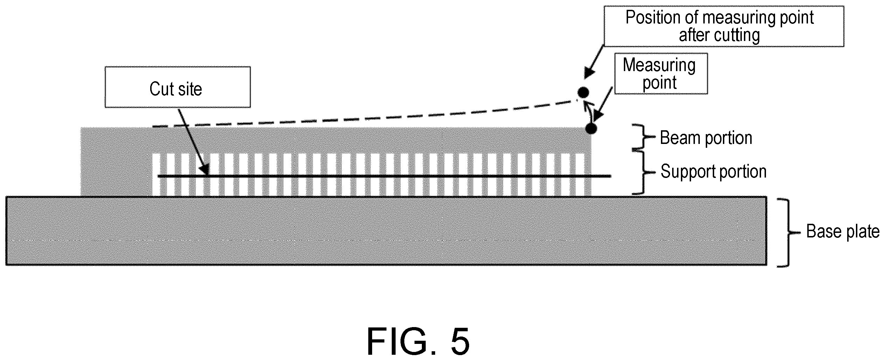

Next, the amounts of warpage of the additively manufactured products were measured. First, a cantilever-shaped test piece shown in FIG. 5 was made on a base plate using the additive manufacturing metal powder of the example of this invention or the comparative example.

Next, the cut sites of the support portion as shown in FIG. 5 were cut by wire electric discharge machining, and the accumulated strain caused the beam portion to warp. As a result, it could be confirmed that the greater the warpage, the more strain was accumulated in the additively manufactured product.

Next, the height of the measuring point at the end of the beam with reference to the base plate was measured before and after cutting the support portion. As shown in Table 4, the increase in height (warp) after cutting in the comparative example was 0.55 mm, while the increase in height (warp) after cutting in the example of this invention was 0.05 mm. It is thus confirmed that the accumulation of strain in the additively manufactured product of the example of this invention was small.

**Table 4**

| | Ms point [°C] | Change in height of measuring point before and after cutting (mm) |
|---|---|---|
| Example of this invention | 118 | 0.05 |
| Comparative Example | 160 | 0.55 |

In order to confirm the influence of the contents of nitrogen and oxygen in the metal powder for additive manufacturing on the formation of inclusions in the additively manufactured product, an investigation on the extraction residuals of the additively manufactured product of the example of this invention and the comparative example was carried out. For the additively manufactured products of the example of this invention and the comparative example, only the mother phase was dissolved with a mixed acid, a filter with a mesh diameter of 10 µm was used to filter, and the extraction residue remaining on the filter was observed using a scanning electron microscope-energy dispersive X-ray spectroscopy (SEM-EDX) method.

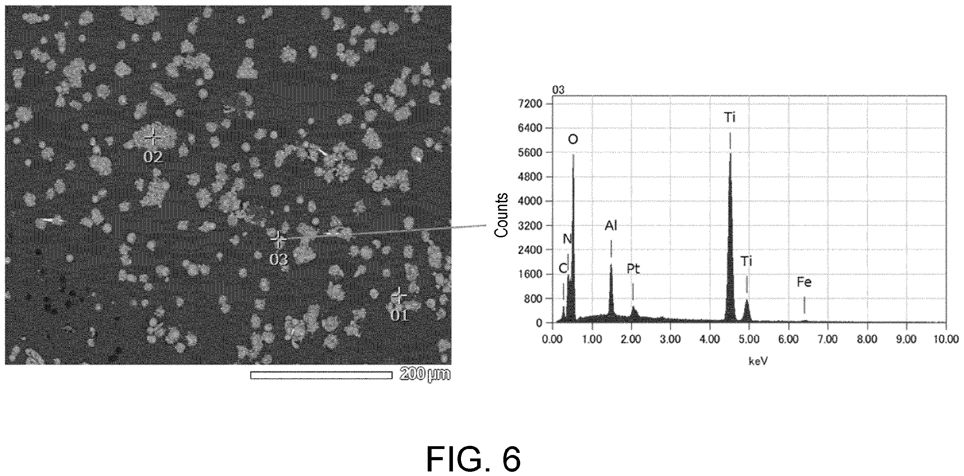

FIG. 6 shows a SEM image of the residual extract of the comparative example left on the filter. From the result in FIG. 6, a large number of inclusions with a diameter of about several tens of µm were observed, and as a result of analysis by energy dispersive X-ray spectroscopy, nitrogen and oxygen were observed. It is considered that the inclusion is a mixture of nitrides and oxides. Since such inclusions are known to be starting points of fatigue fracture, inclusions need to be reduced when additively manufactured products are used in tool products and structural members.

The number of inclusions found in the residual extract was measured to obtain the number of inclusions per 1 g. The results are shown in Table 5.

The additively manufactured product of the example of this invention had less than 50 inclusions per 1 g, whereas the additively manufactured product of the comparative example had 2500 or more inclusions per 1 g. From this result, the additively manufactured product of this invention can be expected to have improved fatigue properties.

**Table 5**

| | Number of inclusions per 1g in additively manufactured product [counts/1 g] |
|---|---|
| Example of this invention | <50 |
| Comparative Example | ≥2500 |

In order to confirm the relationship between the number density of defects in the additively manufactured product and the mechanical properties, additive manufacturing was performed under the manufacturing conditions shown in Table 2 using the metal powder for additive manufacturing of the example of this invention as shown in Table 1. Then, each additively manufactured product thus obtained was held at 950°C for 1 hour for a solution treatment, and cooled in a furnace. After that, as an aging treatment, each additively manufactured product was held at 500°C for 3 hours and air-cooled.

To each additively manufactured product obtained as above, a hardness test, a tensile test, and a Charpy impact test were performed. The results are shown in Table 6.

For hardness, a Rockwell hardness test was performed in accordance with JIS Z 2245 in the build direction of the additively manufactured product. As a result, all the additively manufactured products of the example of this invention had a hardness in the range of 59.2 to 60.3, and it could be confirmed that the hardness necessary for use as a metal product (part) is secured.

For strength and ductility, a tensile test piece was sampled from a horizontal direction with respect to the build direction of the additively manufactured product, and a tensile test was carried out according to JIS Z 2241.

As a result, the reduction of area was 16.3% with the manufacturing condition 1 and 11.5% with the manufacturing condition 2.

For toughness, a Charpy test piece was collected so that the length direction of the notch was aligned with the build direction of the additively manufactured product, and a 2V notch Charpy test was performed in accordance with JIS Z 2242.

As a result, the impact value with the manufacturing condition 1 was 8.5 J/cm², the impact value with the manufacturing condition 2 was 7.8 J/cm², and the impact value with the manufacturing condition 3 was 7.0 J/cm².

**Table 6**

| Manufacturing condition | Density of defects having an equivalent circle diameter exceeding 20 µm | Density of defects having an equivalent circle diameter of 5 µm or more and less than 20 µm | Hardness [HRC] | Tensile strength [MPa] | Elongation [%] | Reduction of area [%] | Charpy impact value [J/cm²] |
|---|---|---|---|---|---|---|---|
| | [counts/mm²] | | | | | | |
| | | [counts/mm²] | | | | | |
| 1 | 0 | 1.0 | 60.3 | 2515 | 6.8 | 16.3 | 8.5 |
| 2 | 0 | 5.8 | 60.0 | 2494 | 3.2 | 11.5 | 7.8 |

## Claims

1. A metal powder for additive manufacturing, comprising, by mass%, 14.0% to 24.0% of Ni, 2.0% to 8.0% of Mo, 10.5% to 20.0% of Co, 0.01% to 2.00% of Al, and 0.10% to 3.00% of Ti, the balance being Fe and unavoidable impurities.

2. The metal powder for additive manufacturing of claim 1, wherein 0.030% by mass or less of nitrogen is included.

3. The metal powder for additive manufacturing of claim 1 or 2, wherein 0.040% by mass or less of oxygen is included.

4. An additively manufactured product, comprising, by mass%, 14.0% to 24.0% of Ni, 2.0% to 8.0% of Mo, 10.5% to 20.0% of Co, 0.01% to 2.00% of Al, and 0.10% to 3.00% of Ti, the balance being Fe and unavoidable impurities, wherein in a cross section thereof parallel to a build direction thereof, there is fewer than 0.1 defect having an equivalent circle diameter of more than 20 µm per 1 mm².

5. The additively manufactured product of claim 4, wherein in the cross section parallel to the build direction, there is 0.1 or more and less than 10 defects having an equivalent circle diameter of 5 µm or more and 20 µm or less per 1 mm².
